# EUROPÄISCHE PATENTANMELDUNG

(11) **EP 4 653 075 A1**
(43) Veröffentlichungstag der Anmeldung: **26.11.2025**
(21) Anmeldenummer: 25171177.6
(22) Anmeldetag: 17.04.2025
(51) Int. Cl.: B01D 53/04

(54) **VORRICHTUNG UND VERFAHREN ZUM EXTRAHIEREN VON CO2 AUS LUFT**

(30) Priorität: 24.05.2024 DE 102024114583; 18.07.2024 DE 102024120259
(71) Anmelder: Purem GmbH, 66539 Neunkirchen (DE)
(72) Erfinder: Többen, Heike, Uhingen (DE); Felger, Dennis, Esslingen (DE); Wolf, Thomas, Esslingen (DE)
(74) Vertreter: Ruttensperger Lachnit Trossin Gomoll

(57) **Zusammenfassung**

Eine Vorrichtung zum Extrahieren von CO₂ aus Luft umfasst wenigstens einen in einem Adsorptionsbetrieb von CO₂ enthaltender Luft (L) durchströmbaren Extraktionsreaktor (12) mit einer Adsorptionsoberfläche, eine Heizanordnung (40) zum Erwärmen des wenigstens einen Extraktionsreaktors (12) wenigstens im Bereich seiner Adsorptionsoberfläche auf eine Temperatur über einer Extraktionsgas-Desorptionstemperatur in einem Heiz/Desorptionsbetrieb, wenigstens einen Extraktionsgas-Speicher (48) zum Speichern von in dem Heiz/Desorptionsbetrieb von dem wenigstens einen Extraktionsreaktor (12) desorbiertem CO₂, wobei der Extraktionsreaktor (12) wenigstens ein Substrat mit einer Vielzahl von durchströmbaren Zellen oder Strömungskanälen einer porösen Struktur umfasst, wobei an dem Substrat die Adsorptionsoberfläche gebildet ist, wobei das wenigstens eine Substrat elektrisch leitend und durch Anlegen einer elektrischen Spannung erwärmbar ist, wobei die Heizanordnung (40) das wenigstens eine Substrat und eine Spannungsquelle (42) zum Anlegen einer elektrischen Spannung an das wenigstens eine Substrat umfasst.

## Beschreibung

Die vorliegende Erfindung betrifft eine Vorrichtung sowie ein Verfahren zum Extrahieren von CO₂ aus Luft.

Um einen den Klimawandel fördernden übermäßigen Anstieg des CO₂-Gehalts in der Erdatmosphäre zu verhindern, werden umfangreiche Maßnahmen zum Vermindern des CO₂-Ausstoßes getroffen. Diese Maßnahmen können jedoch nicht dazu beitragen, den bereits vorhandenen CO₂-Gehalt zu senken, also in der Erdatmosphäre bereits enthaltenes CO₂ wieder aus dieser zu entnehmen. Um dies zu erreichen, ist es beispielsweise bekannt, durch umfangreiche Aufforstungsmaßnahmen oder Renaturierungsmaßnahmen von Mooren natürliche Extraktionsgas-Speicher zu generieren.

Es ist die Aufgabe der vorliegenden Erfindung, eine Vorrichtung und ein Verfahren zum Extrahieren von CO₂ aus Luft vorzusehen, mit welchen bei einfacher technischer Realisierung zuverlässig die Entnahme von CO₂ aus Luft erreicht wird.

Gemäß einem ersten Aspekt der vorliegenden Erfindung wird diese Aufgabe gelöst durch eine Vorrichtung zum Extrahieren von CO₂ aus Luft, umfassend:
- wenigstens einen in einem Adsorptionsbetrieb von CO₂ enthaltender Luft durchströmbaren Extraktionsreaktor mit einer Adsorptionsoberfläche,
- eine Heizanordnung zum Erwärmen des wenigstens einen Extraktionsreaktors wenigstens im Bereich seiner Adsorptionsoberfläche auf eine Temperatur über einer Extraktionsgas-Desorptionstemperatur in einem Heiz/Desorptionsbetrieb,
- wenigstens einen Extraktionsgas-Speicher zum Speichern von in dem Heiz/Desorptionsbetrieb von dem wenigstens einen Extraktionsreaktor desorbiertem CO₂,
wobei der Extraktionsreaktor wenigstens ein Substrat mit einer Vielzahl von durchströmbaren Zellen oder Strömungskanälen einer porösen Struktur umfasst, wobei die Adsorptionsoberfläche an dem wenigstens einen Substrat gebildet ist, wobei das wenigstens eine Substrat elektrisch leitend und durch Anlegen einer elektrischen Spannung erwärmbar ist, wobei die Heizanordnung das wenigstens eine Substrat und eine Spannungsquelle zum Anlegen einer elektrischen Spannung an das wenigstens eine Substrat umfasst.

Da bei der erfindungsgemäß aufgebauten Vorrichtung die Heizanordnung das aufgrund seines elektrischen Widerstandes durch Anlegen einer elektrischen Spannung erwärmbare Substrat umfasst, kann bei Einleitung des Heiz/Desorptionsbetriebs das Substrat mit dem daran adsorbierten CO₂ sehr schnell auf eine ausreichend hohe Temperatur erwärmt werden, bei welcher das an der Adsorptionsoberfläche adsorbierte CO₂ schnell und im Wesentlichen vollständig desorbiert wird. Der Einsatz eines beispielsweise gasartigen Heizmediums, welches eine zeitliche Trennung des Heizbetriebs und des Desorptionsbetriebs erfordert, kann vermieden werden, und die zum Erwärmen des Substrats eingesetzte Energie kann im Wesentlichen ohne Energieverluste zur Desorption von CO₂ genutzt werden.

Es ist darauf hinzuweisen, dass die vorliegende Erfindung besonders vorteilhaft eingesetzt werden kann bei der Extraktion von CO₂ (Kohlendioxid) aus der Erdatmosphäre, also aus Luft. Die vorliegende Erfindung kann aber auch Anwendung finden in Verbindung mit anderen CO₂ enthaltenden Gasgemischen. Insofern ist Luft lediglich als Beispiel bzw. als Platzhalter für derartige CO₂ enthaltende Gasgemische zu betrachten. Alle nachfolgend dargelegten Erfindungsaspekte können gleichermaßen Anwendung finden bei Vorrichtungen bzw. Verfahren, mit welchen CO₂ als Extraktionsgas aus anderen CO₂ enthaltenden Gasgemischen als Luft extrahiert wird.

Ebenso ist CO₂ als Extraktionsgas nur als Beispiel bzw. Platzhalter für beliebige andere, jeweils in einem Gasgemisch enthaltene und aus diesem zu extrahierende Gase zu betrachten, die durch Adsorption aus dem Gasgemisch extrahiert und durch nachfolgende Desorption wieder freigesetzt und in einen entsprechenden Speicher geleitet werden können. Alle nachfolgend dargelegten Erfindungsaspekte können gleichermaßen Anwendung finden bei Vorrichtungen bzw. Verfahren, mit welchen andere Extraktionsgase als CO₂, beispielsweise Wasser bzw. Wasserdampf, aus Luft oder anderen diese enthaltenden Gasgemischen extrahiert werden.

Zur Behandlung großer Luftmengen wird vorgeschlagen, dass wenigstens ein, vorzugsweise jeder Extraktionsreaktor eine Extraktionseinheit mit einer Mehrzahl von parallel zueinander von Luft durchströmbaren Substraten jeweils mit einer Adsorptionsoberfläche umfasst.

Das Substrat kann mit beispielsweise monolithisch ausgebildetem SiC aufgebaut sein. SiC ist ein Material, welches einerseits bereits in anderen Anwendungsgebieten, beispielsweise bei Katalysatoren oder Partikelfiltern für Abgasanlagen von Brennkraftmaschinen, zur Herstellung von eine Vielzahl von von Gas durchströmbaren Zellen aufweisenden Substraten genutzt wird und dessen industrielle Herstellung bereits weit entwickelt ist. Andererseits weist SiC ein derartiges elektrisches Leitungsverhalten auf, dass das Anlegen einer elektrischen Spannung an mit derartigem Material aufgebaute Substrate zu einer Erwärmung auf eine insbesondere zur Desorption von CO₂ erforderliche Temperatur von über 50°C, vorzugsweise im Bereich von 100°C bis 150°C, führen kann.

Alternativ kann zum Aufbau des Substrats verwendet werden:
- Titanoxid, oder
- Metallmaterial, vorzugsweise Metallschaum oder metallische Wabenstruktur.

Zum Bereitstellen der Adsorptionsoberfläche kann das Substrat mit einer Adsorptionsbeschichtung beschichtet sein.

Für eine effiziente Adsorption von CO₂ kann die Adsorptionsbeschichtung mit Zeolith oder metallorganischem Material, wie z.B. MOF CALF-20, aufgebaut sein. Derartige Materialien bzw. metallorganische Gitterstrukturen bilden eine Oberfläche, welche eine hohe Selektivität, also ein ausgeprägtes Adsorptionsverhalten, gegenüber dem zu adsorbierenden Medium, also beispielsweise CO₂, aufweist.

Um im CO₂-Adsorptionsbetrieb eine Durchströmung des wenigstens einen Extraktionsreaktors mit Luft zu erreichen, wird vorgeschlagen, dass wenigstens eine Gasgemisch-Förderanordnung zum Fördern von Luft durch den wenigstens einen Extraktionsreaktor im Adsorptionsbetrieb vorgesehen ist.

Um beim Übergang in den Heiz/Desorptionsbetrieb zu gewährleisten, dass nur desorbiertes Extraktionsgas, also beispielsweise CO₂, in den wenigstens einen Extraktionsgas-Speicher geleitet wird, kann wenigstens eine Extraktionsreaktor-Entleerpumpe zum Abpumpen von Luft, vorzugsweise zur Umgebung, aus dem wenigstens einen Extraktionsreaktor in einem Gasgemisch-Abpumpbetrieb oder/und zum Abpumpen von CO₂ aus dem wenigstens einen Extraktionsreaktor in den Extraktionsgas-Speicher im Heiz/Desorptionsbetrieb vorgesehen sein.

Gemäß einem weiteren Aspekt wird die eingangs angeführte Aufgabe gelöst durch ein Verfahren zum Extrahieren von CO₂ aus Luft vermittels einer erfindungsgemäß aufgebauten Vorrichtung, umfassend die Maßnahmen:
a) in dem Adsorptionsbetrieb, Fördern von Luft durch den wenigstens einen Extraktionsreaktor und Adsorbieren von CO₂ an der Adsorptionsoberfläche des wenigstens einen Extraktionsreaktors,
b) in dem auf den Adsorptionsbetrieb folgenden Heiz/Desorptionsbetrieb, Erwärmen des wenigstens einen Extraktionsreaktors wenigstens im Bereich seiner Adsorptionsoberfläche auf eine über einer Extraktionsgas-Desorptionstemperatur liegende Temperatur durch Anlegen einer elektrischen Spannung an das Substrat des wenigstens einen Extraktionsreaktors und Leiten von von dem wenigstens einen Extraktionsreaktor desorbiertem CO₂ zu dem wenigstens einen Extraktionsgas-Speicher.

Durch die alternierende Adsorption und Desorption von CO₂ in einem oder mehreren Extraktionsreaktoren und das Zuführen des desorbierten Extraktionsgases, also insbesondere CO₂, zu einem oder mehreren Extraktionsgas-Speichern kann in einem getakteten Betrieb CO₂ aus der Erdatmosphäre entnommen, gespeichert und gegebenenfalls in chemischen Prozessen oder direkt, beispielsweise als Schweißgas, weiter genutzt werden.

Um zu gewährleisten, dass im Heiz/Desorptionsbetrieb desorbiertes CO₂ mit möglichst hoher Konzentration zu dem wenigstens einen Extraktionsgas-Speicher geleitet wird, wird vorgeschlagen, dass nach Beenden des Adsorptionsbetriebs und vor Beginn des Heiz/Desorptionsbetriebs in einem Gasgemisch-Abpumpbetrieb in dem wenigstens einen Extraktionsreaktor enthaltene Luft als Restgasatmosphäre abgepumpt wird.

Die vorliegende Erfindung wird nachfolgend mit Bezug auf die beiliegenden Figuren detailliert beschrieben. Es zeigt:
- Fig. 1: eine prinzipartige Darstellung eine Vorrichtung zum Extrahieren von CO₂ aus Luft;
- Fig. 2: eine prinzipielle Schnittdarstellung eines Extraktionsreaktors der Vorrichtung der Fig. 1;
- Fig. 3: eine Querschnittansicht eines mit einer Adsorptionsbeschichtung überzogenen Substrats;
- Fig.4: eine Querschnittansicht einer Extraktionseinheit mit einer Mehrzahl von mit einer Adsorptionsbeschichtung überzogenen Substraten;
- Fig.5: eine der Fig. 4 entsprechende Querschnittansicht einer Extraktionseinheit einer alternativen Ausgestaltungsart.

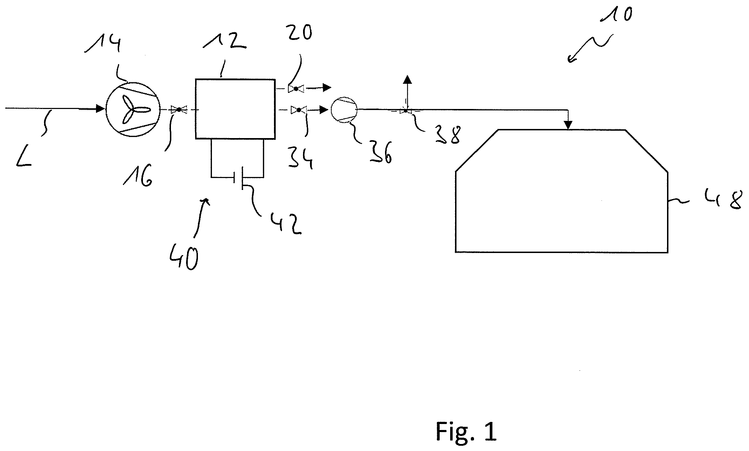

In Fig. 1 ist eine Vorrichtung zum Extrahieren von CO₂ aus Luft allgemein mit 10 bezeichnet. Die DAC-(Direct Air Capture)-Vorrichtung 10 umfasst einen Extraktionsreaktor 12, in welchen in einem Adsorptionsbetrieb Luft L als Gasgemisch vermittels einer als Gebläse oder Kompressor oder dergleichen ausgebildeten Gasgemisch-Förderanordnung 14 gefördert wird. Im Adsorptionsbetrieb ist ein stromaufwärts des Extraktionsreaktors 12 angeordnetes Absperrventil 16 in seiner Freigabestellung, so dass die Luft L den Extraktionsreaktor 12 durchströmen kann und diesen über eine Gasgemisch-Abgabeleitung 18 bzw. ein in dieser angeordnetes Absperrventil 20 wieder zur Umgebung verlassen kann.

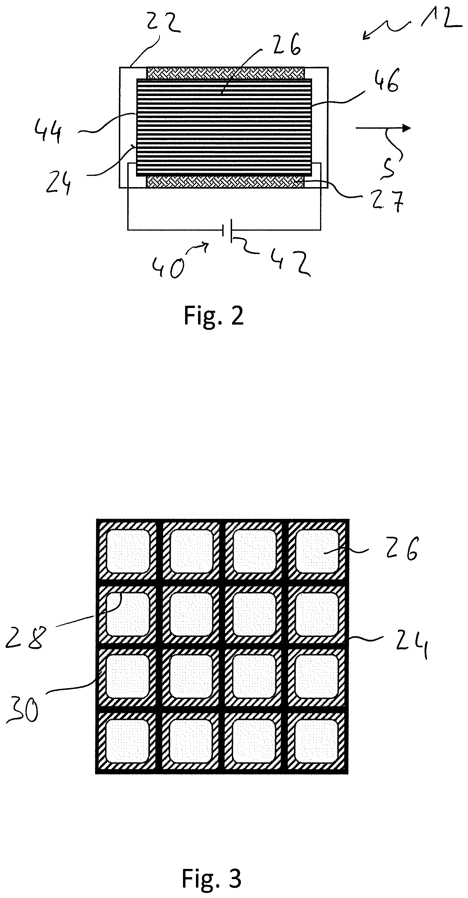

Der in Fig. 2 in prinzipartiger Darstellung im Längsschnitt gezeigte Extraktionsreaktor 12 umfasst in einem beispielsweise rohrartigen Gehäuse 22 ein Substrat 24 mit einer Vielzahl von darin in einer Luftströmungsrichtung S sich erstreckenden, kanalartigen Zellen 26. Das Substrat 24 ist vermittels einer beispielsweise mit Fasermaterial aufgebauten Lageranordnung 27 in dem Gehäuse 22 getragen.

Die Fig. 3 zeigt beispielhaft einen Querschnitt des Substrats 24, welches im dargestellten Beispiel eine quadratische Außenumfangskontur aufweist, gleichermaßen aber eine runde oder anders geformte Querschnittskontur aufweisen kann. Das mit einem elektrisch leitenden Material, vorzugsweise SiC (Siliciumcarbid) aufgebaute Substrat 24 weist die Zellen 26 mit einer Dichte von beispielsweise 40 cpsi (Zellen pro Quadratzoll) bis 750 cpsi auf und kann bei kreisrunder Außenumfangskontur einen Durchmesser von bis zu 13 Zoll, also 32 cm bis 33 cm, aufweisen oder kann bei der dargestellten quadratischen Ausgestaltung eine Kantenlänge von 10 cm bis 30 cm aufweisen. Bei einer alternativen Ausgestaltungsart kann das Substrat 24 beispielsweise mit Titanoxid oder aus Metallmaterial, beispielsweise als metallische Wabenstruktur oder als offenzelliger Metallschaum, ausgebildet sein, der eine Vielzahl von Strömungskanälen bereitstellt. Für derartige mit Metallmaterial aufgebaute Substrate kann ein Metallmaterial verwendet werden, welches üblicherweise auch für Heizleiter verwendet wird. Beispielsweise können Nickel-Kupfer-Legierungen oder Nickel-Chrom-Legierungen verwendet werden.

Das Substrat 24 ist an seiner die Zellen 26 umgrenzenden Oberfläche mit einer eine Adsorptionsoberfläche 28 bereitstellenden Adsorptionsbeschichtung 30 überzogen. Beispielsweise kann für eine derartige Beschichtung Zeolith oder ein metallorganisches Material bzw. eine metallorganische Gitterstruktur wie zum Beispiel MOF CALF-20 verwendet werden, also ein Material, welches hinsichtlich des zu adsorbierenden Materials, beispielsweise CO₂, eine hohe Selektivität, also ein sehr gutes Adsorptionsvermögen, aufweist. Aufgrund der großen Zellendichte wird bei vergleichsweise geringem Strömungswiderstand eine große Oberfläche bereitgestellt, an welcher das in der Luft enthaltene CO₂ im Adsorptionsbetrieb sich anlagern und somit aus der Luft extrahiert werden kann. Die idealerweise vollständig von CO₂ befreite Luft verlässt im Adsorptionsbetrieb den Extraktionsreaktor 12 über die Gasgemisch-Abgabeleitung 18.

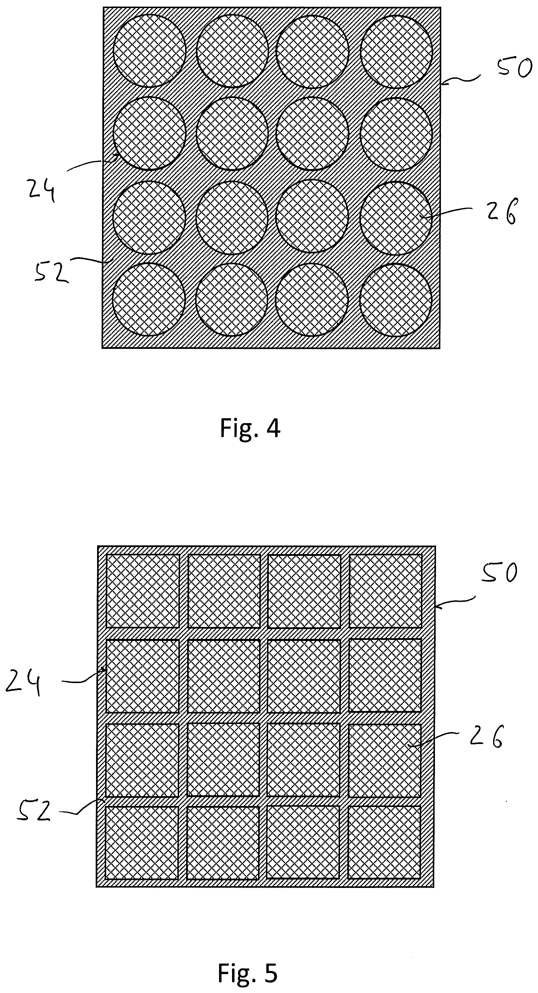

Die Fig. 4 und 5 zeigen verschiedene Ausgestaltungsarten von jeweils eine Mehrzahl der mit einer Adsorptionsbeschichtung 30 beschichteten Substrate 24 umfassenden Extraktionseinheiten 50. Jede Extraktionseinheit 50 umfasst eine Trägerstruktur 52, in welcher eine Vielzahl der Substrate 24 getragen ist. Die beispielsweise mit Kunststoffmaterial oder Metallmaterial aufgebaute Trägerstruktur 52 kann für Gas undurchströmbar sein, so dass das gesamte in den Extraktionsreaktor 12 eingeleitete Gasgemisch durch die Zellen 26 bzw. die Strömungskanäle der Substrate 24 strömt.

Bei der in Fig. 4 dargestellten Ausgestaltungsart der Extraktionseinheit 50 sind die Substrate 24 mit kreisrundem Querschnitt ausgebildet und in einem quadratischen Muster angeordnet, so dass sich zueinander parallele Reihen und Zeilen von zueinander im Wesentlichen nicht versetzt angeordneten Substraten 24 ergeben. Bei einer zu einer höheren Dichte der Substrate 24 beitragenden Struktur können die Substrate 24 benachbarter Zeilen bzw. Reihen zueinander versetzt sein, so dass eine Anordnung nach Art einer dichtesten Kugelpackung entsteht.

Die Fig. 5 zeigt eine Anordnung von Substraten 24 mit quadratischem Querschnitt in der Extraktionseinheit 50. Auch hier sind die Substrate 24 zueinander in quadratischem Muster angeordneten, so dass sich zueinander parallele Zeilen und Reihen von zueinander im Wesentlichen nicht versetzt angeordneten Substraten 24 ergeben.

Grundsätzlich können die Substrate 24 auch andere Querschnittsgeometrien, beispielsweise eine 6-eckige oder 8-eckige Querschnittsgeometrie, aufweisen, um diese in einer derartigen Extraktionseinheit 50 möglichst dicht anordnen zu können.

Durch die Verwendung der Extraktionseinheiten 50 in dem Extraktionsreaktor 12 wird es möglich, bei derartigen im Allgemeinen stationär betriebenen DAC-Vorrichtungen 10 große Volumenströme des Gasgemisches, also beispielsweise Luft, durch den Extraktionsreaktor 12 zu leiten und somit auch entsprechend große Oberflächen zur Behandlung des Gasgemisches bzw. zum Extrahieren des Extraktionsgases, also beispielsweise CO₂, bereitzustellen.

Nach dem Beenden des Adsorptionsbetriebs wird zunächst der CO₂-Adsorptionsreaktor 12 gegen die Durchströmung mit Luft L vollständig abgeschlossen. Dazu werden die beiden Absperrventile 16, 20 in ihre Absperrstellung gebracht. Es wird dann ein in einer Entleerleitung 32 angeordnetes Absperrventil 34 geöffnet und eine Extraktionsreaktor-Entleerpumpe 36 in Betrieb gesetzt, um im Extraktionsreaktor 12 noch enthaltenes Gasgemisch, also Luft, aus diesem abzupumpen und somit einen Unterdruck im Extraktionsreaktor 12 zu erzeugen. Die im Gasgemisch-Abpumpbetrieb aus dem Extraktionsreaktor 12 abgepumpte Luft kann über ein Wegeventil 38 zur Umgebung ausgestoßen werden.

Nach dem Abpumpen der Luft aus dem Extraktionsreaktor 12 wird eine Heizanordnung 40 aktiviert, vermittels welcher das Substrat 24 bzw. die daran vorgesehene Adsorptionsbeschichtung 30 auf eine derartige Temperatur gebracht wird, dass das daran adsorbierte CO₂ desorbiert wird. Die Heizanordnung 40 umfasst das mit elektrisch leitendem Material, also beispielsweise SiC, aufgebaute Substrat 24 und eine in den Fig. 1 und 2 prinzipartig dargestellte Spannungsquelle 42, also beispielsweise eine Batterie oder ein Gleichspannungsnetz oder dergleichen. Die von der Spannungsquelle 42 generierte elektrische Spannung kann an die beiden in der Luftströmungsrichtung S bzw. der Erstreckungsrichtung der kanalartigen Zellen 26 in Abstand zueinander liegenden Stirnseiten 44, 46 des Substrats 26 angelegt werden. Um einen gleichmäßigen Stromfluss durch den gesamten Querschnitt des Substrats 24 zu gewährleisten, können die Stirnseiten 44, 46 des Substrats 24 mit einer beispielsweise mit Metall aufgebauten Elektrodenbeschichtung überzogen sein.

Durch das Anlegen einer elektrischen Spannung erwärmt das Substrat 24 aufgrund des elektrischen Stromflusses sich auf eine über der Desorptionstemperatur liegende Temperatur, so dass bei angelegter elektrischer Spannung und somit fortgesetzter Erwärmung das an der Adsorptionsoberfläche 28 angelagerte CO₂ desorbiert wird.

Zum Ableiten des desorbierten Extraktionsgases CO₂ wird bei in seine Freigabestellung gestelltem Absperrventil 34 die Extraktionsreaktor-Entleerpumpe 36 aktiviert. Weiter wird das Wegeventil 38 so gestellt, dass das aus dem Extraktionsreaktor 12 abgepumpte CO₂ nicht zur Umgebung, sondern in einen Extraktionsgas-Speicher 48 gefördert wird, in welchem das aus der Luft extrahierte CO₂ beispielsweise bei einem Speicherdruck von etwa 50 bar und bei Umgebungstemperatur gespeichert werden kann.

Zum Beenden des Heiz/Desorptionsbetriebs wird das Anlegen einer elektrischen Spannung an das Substrat 24 beendet. Auch der Betrieb der Extraktionsreaktor-Entleerpumpe 36 wird beendet und das Absperrventil 34 wird in seine Absperrstellung gebracht. Um dann wieder den Adsorptionsbetrieb zu starten, werden die beiden Absperrventile 16, 18 in ihre Freigabestellung gebracht und die Gasgemisch-Förderanordnung 14 wird in Betrieb gesetzt, um erneut CO₂ enthaltende Luft, also ein ein Extraktionsgas enthaltendes Gasgemisch, durch den Extraktionsreaktor 12 bzw. die Zellen 26 des Substrats 24 desselben zu leiten und dabei in der Luft enthaltenes CO₂ an der Adsorptionsoberfläche 28 zu adsorbieren.

Die verschiedenen Betriebsarten Adsorptionsbetrieb und Heiz/Desorptionsbetrieb, können jeweils über diesen zugeordnete, fest vorgegebene Zeitdauern durchgeführt werden. Auch ist es möglich, unter Verwendung entsprechender Steuer- bzw. Regeltechniken und bei Einsatz von die verschiedenen Gaskonzentrationen bzw. Gaszusammensetzungen repräsentierender Information bereitstellenden Sensoren bei unter- bzw. Überschreiten definierter Schwellen-Gaskonzentrationen die jeweiligen Prozessschritte einzuleiten bzw. zu beenden.

Es ist abschließend darauf hinzuweisen, dass die Vorrichtung 10 in verschiedenen Aspekten variiert werden kann. Beispielsweise können mehrere derartige Extraktionsreaktoren vorgesehen sein, die entweder synchron oder wechselweise im Adsorptionsbetrieb bzw. im Heiz/Desorptionsbetrieb betrieben werden können. Beispielsweise kann ein Extraktionsreaktor bzw. ein Teil der Extraktionsreaktoren im Adsorptionsbetrieb betrieben werden, während ein anderer Extraktionsreaktor bzw. ein weiterer Teil der Extraktionsreaktoren im Heiz/Desorptionsbetrieb betrieben wird. Alle Extraktionsreaktoren können dabei beispielsweise aus der gleichen Spannungsquelle gespeist werden, so dass die den verschiedenen Extraktionsreaktoren zugeordneten Heizanordnungen über eine gemeinsame Spannungsquelle miteinander verknüpft sein können. Abhängig davon, welcher der Extraktionsreaktoren im Heiz/Desorptionsbetrieb zu betreiben ist, kann dann die von der Spannungsquelle bereitgestellte Spannung durch das Schließen entsprechender Stromkreise an dessen Substrat angelegt werden.

## Patentansprüche

1. Vorrichtung zum Extrahieren von CO₂ aus Luft, umfassend:
- wenigstens einen in einem Adsorptionsbetrieb von CO₂ enthaltender Luft (L) durchströmbaren Extraktionsreaktor (12) mit einer Adsorptionsoberfläche (28),
- eine Heizanordnung (40) zum Erwärmen des wenigstens einen Extraktionsreaktors (12) wenigstens im Bereich seiner Adsorptionsoberfläche (28) auf eine Temperatur über einer Extraktionsgas-Desorptionstemperatur in einem Heiz/Desorptionsbetrieb,
- wenigstens einen Extraktionsgas-Speicher (48) zum Speichern von in dem Heiz/Desorptionsbetrieb von dem wenigstens einen Extraktionsreaktor (12) desorbiertem CO₂,
wobei der Extraktionsreaktor (12) wenigstens ein Substrat (24) mit einer Vielzahl von durchströmbaren Zellen (26) oder Strömungskanälen einer porösen Struktur umfasst, wobei die Adsorptionsoberfläche (28) an dem wenigstens einen Substrat (24) gebildet ist, wobei das wenigstens eine Substrat (24) elektrisch leitend und durch Anlegen einer elektrischen Spannung erwärmbar ist, wobei die Heizanordnung (40) das wenigstens eine Substrat (24) und eine Spannungsquelle (42) zum Anlegen einer elektrischen Spannung an das wenigstens eine Substrat (24) umfasst.

2. Vorrichtung nach Anspruch 1,
**dadurch gekennzeichnet, dass** wenigstens ein, vorzugsweise jeder Extraktionsreaktor (12) eine Extraktionseinheit (50) mit einer Mehrzahl von parallel zueinander von Luft durchströmbaren Substraten (24) jeweils mit einer Adsorptionsoberfläche (28) umfasst.

3. Vorrichtung nach Anspruch 1 oder 2,
**dadurch gekennzeichnet, dass** das wenigstens eine Substrat (24) aufgebaut ist mit:
- SiC, oder
- Titanoxid,
- Metallmaterial, vorzugsweise Metallschaum oder metallische Wabenstruktur.

4. Vorrichtung nach einem der Ansprüche 1-3,
**dadurch gekennzeichnet, dass** das wenigstens eine Substrat (24) mit einer die Adsorptionsoberfläche (28) bereitstellenden Adsorptionsbeschichtung (30) beschichtet ist.

5. Vorrichtung nach Anspruch 4,
**dadurch gekennzeichnet, dass** die Adsorptionsbeschichtung (30) aufgebaut ist mit:
- Zeolith, oder
- metallorganischem Material.

6. Vorrichtung nach einem der Ansprüche 1-5,
**dadurch gekennzeichnet, dass** wenigstens eine Gasgemisch-Förderanordnung (14) zum Fördern von Luft (L) durch den wenigstens einen Extraktionsreaktor (12) im Adsorptionsbetrieb vorgesehen ist.

7. Vorrichtung nach einem der Ansprüche 1-6,
**dadurch gekennzeichnet, dass** wenigstens eine Extraktionsreaktor-Entleerpumpe (36) zum Abpumpen von Luft (L), vorzugsweise zur Umgebung, aus dem wenigstens einen Extraktionsreaktor (12) in einem Gasgemisch-Abpumpbetrieb oder/und zum Abpumpen von CO₂ aus dem wenigstens einen Extraktionsreaktor (12) in den Extraktionsgas-Speicher (48) im Heiz/Desorptionsbetrieb vorgesehen ist.

8. Verfahren zum Extrahieren von CO₂ aus Luft vermittels einer Vorrichtung nach einem der Ansprüche 1-7, umfassend die Maßnahmen:
a) in dem Adsorptionsbetrieb, Fördern von Luft (L) durch den wenigstens einen Extraktionsreaktor (12) und Adsorbieren von CO₂ an der Adsorptionsoberfläche (28) des wenigstens einen Extraktionsreaktors (12),
b) in dem auf den Adsorptionsbetrieb folgenden Heiz/Desorptionsbetrieb, Erwärmen des wenigstens einen Extraktionsreaktors (12) wenigstens im Bereich seiner Adsorptionsoberfläche (28) auf eine über einer Extraktionsgas-Desorptionstemperatur liegende Temperatur durch Anlegen einer elektrischen Spannung an das wenigstens eine Substrat (24) des wenigstens einen Extraktionsreaktors (12) und Leiten des von dem wenigstens einen Extraktionsreaktor (12) desorbierten CO₂ zu dem wenigstens einen Extraktionsgas-Speicher (48).

9. Verfahren nach Anspruch 8,
**dadurch gekennzeichnet, dass** nach Beenden des Adsorptionsbetriebs und vor Beginn des Heiz/Desorptionsbetriebs in einem Gasgemisch-Abpumpbetrieb in dem wenigstens einen Extraktionsreaktor (12) enthaltene Luft (L) abgepumpt wird.
